(19) Europäisches Patentamt

European Patent Office

Office européen des brevets

(11) Veröffentlichungsnummer: **0 311 844 B1**

(12) **EUROPÄISCHE PATENTSCHRIFT**

(45) Veröffentlichungstag der Patentschrift: **22.01.92**

(21) Anmeldenummer: **88116012.1**

(22) Anmeldetag: **28.09.88**

(51) Int. Cl.⁵: **F16D 13/64**, F16D 69/04

(54) **Kupplungsscheibe.**

(30) Priorität: **14.10.87 DE 8713810 U**

(43) Veröffentlichungstag der Anmeldung:
**19.04.89 Patentblatt 89/16**

(45) Bekanntmachung des Hinweises auf die
Patenterteilung:
**22.01.92 Patentblatt 92/04**

(84) Benannte Vertragsstaaten:
**DE FR GB IT**

(56) Entgegenhaltungen:
**GB-A- 2 087 489**

(73) Patentinhaber: **Fichtel & Sachs AG**
**Ernst-Sachs-Strasse 62**
**W-8720 Schweinfurt(DE)**

(72) Erfinder: **Schraut, Alfred**
**Rosenstrasse 20**
**W-8722 Waigolshausen(DE)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**W-8000 München 86(DE)**

## Beschreibung

Die Erfindung betrifft eine Kupplungsscheibe für eine Kraftfahrzeug-Reibungskupplung nach dem Oberbegriff von Patentanspruch 1. Die Kupplungsscheibe besitzt axial gefederte Reibbelagplatten.

Aus dem britischen Patent GB-A-1 170 215 ist eine Kupplungsscheibe für die Reibungskupplung eines Kraftfahrzeugs bekannt, die auf axial beiden Seiten einer an einer Nabe gehaltenen Belagträgerscheibe Reibbelagplatten trägt. Die Reibbelagplatten bestehen aus gesintertem Material und sind auf der zum Motor des Kraftfahrzeugs weisenden Seite unmittelbar an der Belagträgerscheibe angebracht, während sie auf der zum Getriebe des Kraftfahrzeugs weisenden Seite mit Hilfe von axial federnden Federsegmenten an der Belagträgerscheibe befestigt sind. Die Federsegmente sind in Umfangsrichtung der Belagträgerscheibe gewölbt und haben in ihrer Mitte rechteckförmige Vorsprünge, die in komplementär geformte Aussparungen der Belagträgerscheibe eingreifen und das Federsegment verdrehfest, aber axial beweglich an der Belagträgerscheibe führen. Die Drehmomentbelastbarkeit einer Kupplungsscheibe dieser Art ist jedoch begrenzt, insbesondere da dennoch es zu einer Relativdrehung der Reibbelagplatten und der Belagträgerscheibe kommen kann, die das Betriebsverhalten der Kupplung unerwünscht beeinflußt.

Aus der DE-A-2 063 881 ist eine weitere Kupplungsscheibe für eine Kraftfahrzeug-Reibungskupplung bekannt, bei welcher an der an einer Nabe gehaltenen Belagträgerscheibe vom Außenumfang sternförmig radial abstehende Belagträgersegmente integral angeformt sind. Die Belagträgersegmente sind in Umfangsrichtung gewölbt und tragen auf ihrer konkaven Seite komplementäre, ebenfalls in Umfangsrichtung, jedoch gegensinnig gewölbte Belagträgersegmente. Die einander zugeordneten Belagträgersegmente sind im Bereich des Übergangs zum Außenumfang der Belagträgerscheibe verengt und durch Nieten miteinander sowie gegebenenfalls mit der Belagträgerscheibe verbunden. Auf den konvexen, nach außen gerichteten Seiten der zueinander axial federnden Belagträgersegmente sind Reibbelagplatten, beispielsweise aus einem gesinterten Material, angenietet. Die über eine Kupplungsscheibe dieser Art übertragbare Leistung ist jedoch ebenfalls für manche Anwendungsfälle unzureichend. Zwar ist die Gefahr, daß es zu einer Relativbewegung der Reibbelagplatten und der Belagträgerscheibe in Umfangsrichtung kommt, verringert, jedoch besteht die Gefahr, daß sich die Kupplungsscheibe bei hoher thermischer Belastung im Bereich der Belagträgersegmente verzieht, was sich nachteilig auf das Betriebsverhalten der Reibungskupplung auswirkt, nachdem der Lüftweg der Reibungskupplung normalerweise gering ist.

Es ist Aufgabe der Erfindung, eine Kupplungsscheibe für eine Kraftfahrzeug-Reibungskupplung zu schaffen, die sowohl mechanisch als auch thermisch hoch belastbar ist. Die Lösung dieser Aufgabe erfolgt mit den Merkmalen des kennzeichnenden Teils von Patentanspruch 1.

Die erfindungsgemäße Kupplungsscheibe umfaßt eine Nabe mit einer daran gehaltenen Belagträgerscheibe. Im Bereich des Außenumfangs der Belagträgerscheibe sind mehrere in Umfangsrichtung gegeneinander versetzte Reibbelagplatten auf axial beiden Seiten der Belagträgerscheibe angeordnet. Die Reibbelagplatten bestehen vorzugsweise aus einem metallhaltigen Sintermaterial, wie zum Beispiel Metallkeramik. Auf zumindest einer der beiden axialen Seiten, vorzugsweise der zum Getriebe des Kraftfahrzeugs weisenden Seite der Belagträgerscheibe, sind axial federnde Federsegmente angeordnet, von denen jedes zumindest eine der auf dieser axialen Seite der Belagträgerscheibe angeordneten Reibbelagplatten trägt. Die Federsegmente sind im wesentlichen ausschließlich in radialer Richtung gewölbt und sowohl in Umfangsrichtung seitlich der daran befestigten Reibbelagplatte durch erste Befestigungselemente, insbesondere Nieten als auch radial zur Nabe hin seitlich der Reibbelagplatte durch zweite vorzugsweise ebenfalls als Nieten ausgebildete Befestigungselemente an der Belagträgerscheibe gehalten. Während die zweiten Nieten die Federsegmente fest mit der Belagträgerscheibe verbinden, führen die ersten Befestigungselemente die Federsegmente mit axialem Spiel radial beweglich an der Belagträgerscheibe. Auf diese Weise werden die axial gefederten Reibbelagplatten auch bei hoher thermischer Belastung nahezu verwindungssteif und formstabil an der Belagträgerscheibe geführt. Die Befestigung ist darüberhinaus mechanisch sehr dauerhaft.

In einer bevorzugten Ausgestaltung steht das Federsegment sowohl in Umfangsrichtung auf beiden Seiten der Reibbelagplatte als auch radial zur Nabe hin mit einem zwischen den Befestigungselementen geschlossenflächigen, der Randkontur der Reibbelagplatte im wesentlichen folgenden Randstreifen über die Reibbelagplatte vor. Der über die ersten und zweiten Befestigungselemente an der Belagträgerscheibe befestigte Randstreifen hat damit keine Löcher oder quer zum Außenrand verlaufende Schlitze, die sich nachteilig auf das Verwindungsverhalten des Federsegments auswirken könnten.

Um Drehschwingungen des Antriebsstrangs zu vermeiden oder gegebenenfalls einfach dämpfen zu können, soll das Massenträgheitsmoment der Kupplungsscheibe möglichst gering sein. Diese Forderung läßt sich mit der Forderung hoher Belastbarkeit der Kupplung vereinigen, wenn gemäß einer weiteren zweckmäßigen Ausgestaltung die Reibbelagplatten und die Federsegmente angenähert Trapezform haben und sich zur Nabe hin verjüngen, wobei die ersten Nieten und der Flächenschwerpunkt der Reibbelagplatten angenähert auf gleichem Radius um die Drehachse der Kupplungsscheibe angeordnet sind. Insbesondere wenn die Belagträgerscheibe zwischen in Umfangsrichtung benachbarten Reibbelagplatten radial nach außen offene Aussparungen hat, läßt sich ein relativ geringes Massenträgheitsmoment der Kupplungsscheibe erreichen.

Bei den ersten Befestigungselementen handelt es sich zweckmäßigerweise um Abstandnieten, die mit radialem Spiel durch Löcher der Federsegmente treten und deren das Federsegment hintergreifender Kopf das Federsegment mit axialem Spiel an der Belagträgerscheibe hält. Das Loch, durch das der Schaft der Abstandniete tritt, kann als Kreisloch oder als radial verlaufendes Langloch ausgebildet sein.

In einer bevorzugten Ausgestaltung ist die Reibbelagplatte mit zwei Nieten an dem Federsegment befestigt, von denen eine auf einem kleineren Radius als der Radius des Flächenschwerpunkts der Reibbelagplatte und die andere auf einem größeren Radius angeordnet ist. Dies erlaubt die Verwendung identischer Reibbelagplatten auf beiden Seiten der Belagträgerscheibe.

Im folgenden wird ein Ausführungsbeispiel der Erfindung anhand einer Zeichnung näher erläutert. Hierbei zeigt:

Fig. 1 eine teilweise Draufsicht auf eine Kupplungsscheibe für eine Kraftfahrzeug-Reibungskupplung;

Fig. 2 eine Schnittansicht der Kupplungsscheibe, gesehen entlang einer Linie II-II in Fig. 1 und

Fig. 3 einen Detailschnitt durch die Kupplungsscheibe, gesehen entlang einer Linie III-III in Fig. 1.

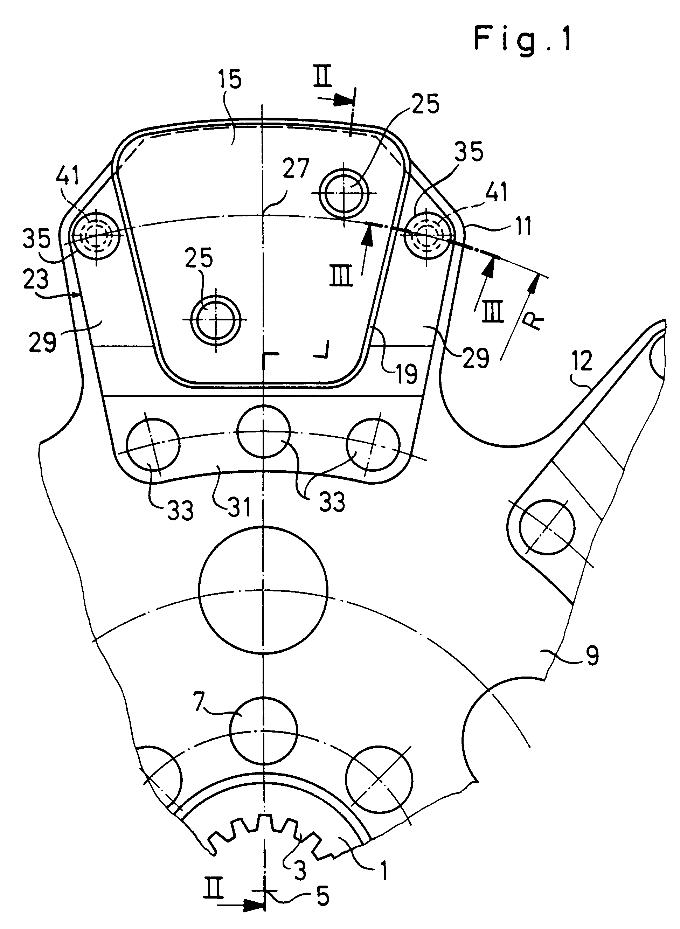

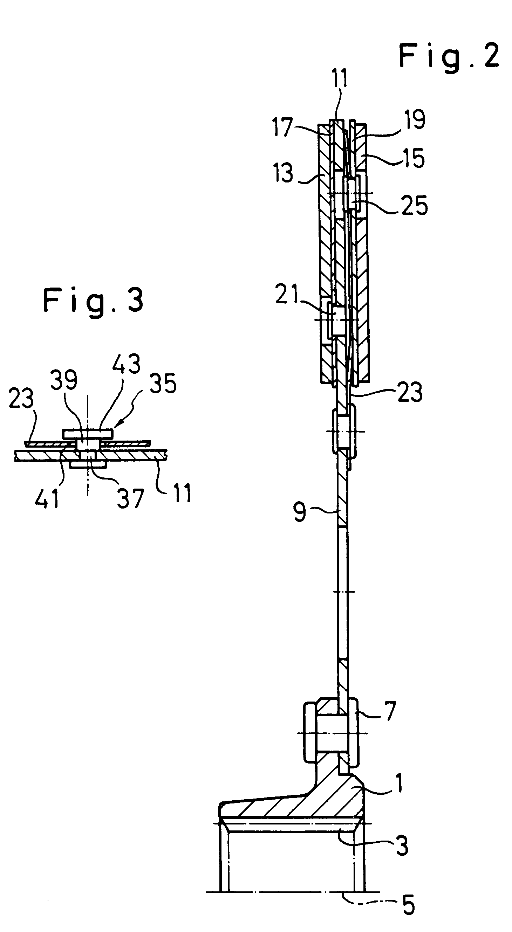

Wie die Fig. 1 und 2 zeigen, umfaßt die insbesondere für die Reibungskupplung eines Traktors oder Lastkraftwagens geeignete Kupplungsscheibe eine Nabe 1 mit einer Innenverzahnung 3, über die sie in herkömmlicher Weise drehfest aber axial verschiebbar auf einer nicht näher dargestellten, um eine Drehachse 5 drehbaren Getriebeeingangswelle geführt ist. An der Nabe 1 ist mit Nieten 7 eine als ebenes Blechteil ausgebildete Nabenscheibe bzw. Belagträgerscheibe 9 befestigt, von der im Bereich des Außenumfangs sternförmig Trägersegmente 11 radial abstehen. Die Trägersegmente 11 sind durch radial verlaufende, nach außen offene Aussparungen 12 in Umfangsrichtung voneinander getrennt.

Auf axial beiden Seiten der Trägersegmente 11 sind im wesentlichen trapezförmige Reibbelagplatten 13, 15 angeordnet, die an ihren einander zugewandten Flächen Trägerbleche 17, 19 für die Befestigung an der Belagträgerscheibe 9 tragen. Die Reibbelagplatten 13, 15 können aus herkömmlichem Reibmaterial bestehen, sind jedoch vorzugsweise aus einem metallhaltigen Sintermaterial, beispielsweise Metallkeramik gefertigt. Zumindest die Außenkonturen der im wesentlichen deckungsgleich gegenüberliegend angeordneten Reibbelagplatten 13, 15 einerseits sowie der Trägerbleche 17, 19 andererseits sind identisch. Vorzugsweise sind die Reibbelagplatten 13, 15 einschließlich der daran befestigten Trägerbleche 17, 19 insgesamt in allen Abmessungen identisch.

Die zum Motor des Kraftfahrzeugs weisenden Reibbelagplatten 13 sind jeweils durch zwei Nieten 21, von denen Fig. 2 lediglich eine zeigt, unmittelbar an den Belagträgersegmenten 21 befestigt. Die zum Getriebe weisenden Reibbelagplatten 15 sind hingegen über axial federnde Federsegmente 23 an der Belagträgerscheibe 9 befestigt. Zur Befestigung der Reibbelagplatte 15 an dem Federsegment 23 sind zwei Nieten 25 vorgesehen, die, ebenso wie die Nieten 21 der Reibbelagplatte 13, im wesentlichen diagonal zur trapezförmigen Fläche der Reibbelagplatte 15 versetzt angeordnet sind. Die Anordnung ist so getroffen, daß eine der Nieten 25 bzw. 21 auf einem kleineren Radius als der in Fig. 1 mit R bezeichnete Radius durch den Flächenschwerpunkt 27 der zur Nabe 1 hin sich verjüngenden Trapezform der Reibbelagplatten 13, 15 angeordnet ist, während die jeweils zweite Niete 25 bzw. 21 auf einem größeren Radius als der Radius R vorgesehen ist. Bei einer solchen Anordnungsweise sind trotz identischer Gestaltung der Reibbelagplatten 13, 15 die Nieten 21, 25 gegeneinander versetzt. Es versteht sich, daß in den Reibbelägen und gegebenenfalls dem Belagträgersegment 11 Aussparungen für die Aufnahme der Nietköpfe vorgesehen sind.

Die Federsegmente 23 sind in axialer Richtung gewölbt und haben eine Kontur, die in Umfangsrichtung beiderseits der Reibbelagplatten 15 unter Bildung von Randstreifen 29 sowie radial zur Nabe 1 hin unter Bildung von Randstreifen 31 über die Reibbelagplatten 15 vorstehen, wobei die Randstreifen 29, 31 im wesentlichen der Kontur der Reibbelagplatte 15 folgen. Entlang dem zur Nabe 1 hin vorstehenden Randstreifen 31 ist jedes Federsegment 23 durch mehrere, hier drei, Nieten 33 an der Belagträgerscheibe 9 befestigt. Die Nieten 33 sind auf gleichem Radius zur Drehachse 5 angeordnet, wobei der Radius kleiner ist als der Radius durch die Böden der Aussparungen 13, also in einem in Umfangsrichtung ansonsten geschlossenen Bereich der Belagträgerscheibe 9 verläuft. In Umfangsrichtung beiderseits der Reibbelagplatte 15 ist jedes Federsegment 23 durch Abstandnieten 35 sowohl axial als auch radial beweglich an dem Belagträgersegment 11 geführt. Die Abstandnieten 35 sind hierbei mit einem Abstand zur Drehachse 5 angeordnet, der im wesentlichen gleich dem Radius R durch den Flächenschwerpunkt 27 der Belagträgerplatte 15 ist.

Wie am besten Fig. 3 zeigt, ist jede Abstandniete 35 mit einem verjüngten Schaftabschnitt 37 an dem Belagträgersegment 11 befestigt und tritt mit einem verdickten Schaftabschnitt 39 mit radialem Spiel durch ein durchmessergrößeres Loch 41 des Federsegments 23. Am freien Ende des Schaftabschnitts 39 hintergreift ein Kopf 43 mit axialem Spiel das Federsegment 23. Das Loch 41 kann Kreisform haben oder als radiales Langloch ausgebildet sein. Die Abstandniete 35 verhindert auch bei thermischer Belastung der Kupplungsscheibe, daß sich das Federsegment 23 unzulässig verwindet, wodurch es zu Störungen des Auskuppelbetriebs der Kupplung kommen könnte. Die Randbereiche 29, 31 sind zwischen den Nieten 35 und 33 einerseits bzw. den Nieten 33 untereinander andererseits geschlossenflächig, d.h. sie enthalten keine Löcher oder randseitigen Schlitze, die das Verwindungsverhalten des Federsegments in unerwünschter Weise beeinflussen könnten.

Die trapezförmige Gestalt der Reibbelagplatten 13, 15 und der damit ebenfalls im wesentlichen trapezförmigen Kontur der überdies angenähert deckungsgleich der Kontur der Belagträgersegmente folgenden Federsegmente 23 wird ein vergleichsweise geringes Massenträgheitsmoment der Kupplungsscheibe bei hoher Belastbarkeit sichergestellt.

**Patentansprüche**

1.  Kupplungsscheibe für eine Kraftfahrzeug-Reibungskupplung, umfassend eine Nabe (1) mit einer daran gehaltenen Belagträgerscheibe (9), mehrere im Bereich des Außenumfangs der Belagträgerscheibe (9) in Umfangsrichtung gegeneinander versetzte, mit der Belagträgerscheibe (9) verbundene Reibbelagplatten (13, 15), insbesondere aus einem metallhaltigen Sintermaterial auf axial beiden Seiten der Belagträgerscheibe (9), auf zumindest einer der beiden axialen Seiten der Belagträgerscheibe (9) angeordnete, axial federnde Federsegmente (23), von denen jedes zumindest eine der auf dieser axialen Seite der Belagträgerscheibe (9) angeordneten Reibbelagplatten (15) trägt und sowohl in Umfangsrichtung beiderseits seitlich dieser Reibbelagplatte (9) durch erste Befestigungselemente (35), insbesondere Nieten, als auch radial zur Nabe (1) hin seitlich dieser Reibbelagplatte (9) durch zweite Befestigungselemente (33), insbesondere Nieten, an der Belagträgerscheibe (9) gehalten sind, **dadurch gekennzeichnet,** daß die Federsegmente (23) in axialer Richtung gewölbt sind und daß die ersten Befestigungselemente (35) die Federsegmente (23) mit axialem Spiel radial beweglich an der Belagträgerscheibe (9) führen.

2.  Kupplungsscheibe nach Anspruch 1, dadurch gekennzeichnet, daß das Federsegment (23) sowohl in Umfangsrichtung auf beiden Seiten der Reibbelagplatte (9) als auch radial zur Nabe (1) hin mit einem zwischen den Befestigungselementen (33, 35) geschlossenflächigen, der Randkontur der Reibbelagplatte (15) im wesentlichen folgenden Randstreifen (29, 31) über die Reibbelagplatte (15) vorsteht.

3.  Kupplungsscheibe nach Anspruch 2, dadurch gekennzeichnet, daß die Reibbelagplatten (13, 15) und die Federsegmente (23) angenähert Trapezform haben und sich zur Nabe (1) hin verjüngen und daß die ersten Befestigungselemente (35) und der Flächenschwerpunkt (27) der Reibbelagplatten (13, 15) angenähert auf gleichem Radius (R) angeordnet sind.

4.  Kupplungsscheibe nach Anspruch 3, dadurch gekennzeichnet, daß die Reibbelagplatte (15) mit zwei Befestigungselementen (35) an dem Federsegment (23) befestigt ist, von denen eine auf einem kleineren Radius als der Radius (R) des Flächenschwerpunkts (27) und die andere auf einem größeren Radius angeordnet ist.

5.  Kupplungsscheibe nach einem der Ansprüche 1 bis 4, dadurch gekennzeichnet, daß die ersten Befestigungselemente als Abstandnieten (35) ausgebildet sind, die mit radialem Spiel durch Löcher (41) der Federsegmente (23) treten und deren das Federsegment (23) hintergreifender Kopf (43) das Federsegment (23) mit axialem Spiel an der Belagträgerscheibe (9) hält.

6.  Kupplungsscheibe nach einem der Ansprüche 1 bis 5, dadurch gekennzeichnet, daß die Reibbelagplatten (13, 15) sämtlich im wesentlichen gleiche Kontur haben und auf im wesentlichen deckungsgleichen Trägerblechen (19) deckungsgleich auf axial beiden Seiten der Belagträgerscheibe (9) angeordnet sind, und daß die Belagträgerscheibe (9) zwischen in Umfangsrichtung benachbarten Reibbelagplatten (13, 15) mit zum Außenumfang offenen radialen Aussparungen (12) versehen ist, deren radiale Ränder im wesentlichen den radialen Rändern der Federsegmente (23) folgt.

7. Kupplungsscheibe nach einem der Ansprüche 2 bis 6, dadurch gekennzeichnet, daß von der Belagträgerscheibe (9) im Bereich ihres Außenumfangs mehrere Belagträgersegmente (11) sternförmig radial abstehen, welche durch zum Außenumfang offene Aussparungen (12) voneinander getrennt sind,
daß die Reibbelagplatten (13, 15) paarweise auf axial beiden Seiten jedes Belagträgersegments (11) angeordnet sind, wobei eine erste Reibbelagplatte (13) jedes Paars unmittelbar an dem Belagträgersegment (11) befestigt ist und eine zweite Reibbelagplatte (15) jedes Paars an dem durch die ersten Befestigungselemente (35) an dem Belagträgersegment (11) geführten und durch die zweiten Befestigungselemente (33) an der Belagträgerscheibe (9) gehaltenen Federsegment (23) befestigt ist, und daß die Belagträgersegmente (11) mit Hilfe der ersten Befestigungselemente (35) unzulässiges Verwinden der Federsegmente (23) bei thermischer Belastung verhindern.

**Claims**

1. A clutch disc for a motor vehicle friction clutch, comprising a hub (1) with a lining carrier disc (9) held on it, several friction lining plates (13, is) connected with the lining carrier disc (9) in the area of the outer circumference of the lining carrier disc (9) and offset relative to each other in the circumferential direction, made particularly in a sintered material containing metal, mounted on both sides in axial terms of the lining carrier disc (9), axially sprung psring segments (23) mounted on at least one of the two axial sides of the lining carrier disc (9), of which segments each one supports at least one of the friction lining plates (15) mounted on this axial side of the lining carrier disc (9), the spring segments being held on the lining carrier disc (9) both in the circumferential direction, on both sides laterally relative to this friction lining plate (15) by first securing elements (35), particularly rivets, and also radially towards the hub (1) laterally to this friction lining plate (15) by second securing elements (33), particularly rivets, characterized in that the spring segments (23) are arched in the axial direction, and in that the first securing elements (35) guide the spring segments (23) radially movably with axial play on the lining carrier disc (9).

2. A clutch disc according to claim 1, characterized in that the spring segment (23) protrudes above the friction lining plate (15) both in the circumferential direction on both sides of the friction lining plate (15), and also radially towards the hub (1) with an edge strip (29, 31) with closed flat surface between the securing elements (33, 35), following substantially the edge outline of the friction lining plate (15).

3. A ckutch disc according to claim 2, characterized in that the friction lining plates (13, 15) and the spring segments (23) are of approximately trapezoidal shape, and in that the first securing elements (35) and the surface centre of gravity (27) of the friction lining plates (13, 15) are arranged approximately on the same radius (R).

4. A clutch disc according to claim 3, characterized in that the friction lining plate (15) is secured to the spring segment (23) by means of two securing elements (35) of which one is mounted on a radius which is smaller than the radius (R) of the surface centre of gravity, and the other is mounted on a greater radius.

5. A clutch disc according to one of claims 1 to 4, characterized in that the first securing elements are designed as separating rivets (35) which enter with radial play holes (41) of the spring segments (23), and the head (43) of which, gripping the spring segment (23), holds the said spring segment (23) with axial play on the lining carrier disc (9).

6. A clutch disc according to one of claims 1 to 5, characterized in that the friction lining plates (13, 15) all have substantially the same outline and are mounted on substantially congruent carrier metal sheets (19) congruently on both sides in axial terms of the lining carrier disc (9), and in that the lining carrier disc (9) is provided, between friction lining plates (13, 15) adjacent in circumferential direction with radial (12) recesses open to the external circumference, the radial edges of which follows substantially the radial edges of the spring segments (23).

7. A clutch disc according to one of claims 2 to 6, characterized in that, from the lining carrier disc (9), in the region of its outer periphery, several lining carrier segments (11) protrude radially in a star pattern, being separated from one another by recesses (12) facing the outer periphery,
in that the friction lining plates (13, 15) are arranged pairwise on the two sides in axial terms of each lining carrier segment (11), one first friction lining plate (13) of each pair being directly secured on the lining carrier segment (11), and a Second friction lining plate (15) of each pair heing secured on the spring segment (23) guided on the lining carrier segment (11) by the first securing elements (35), and held by the second securing elements (33) on the lining carrier disc (9),

and in that the lining carrier segments (11), aided by the first securing elements (35), prevent impermissible distortion of the spring segments (23) on thermal loading.

**Revendications**

1. Disque d'embrayage pour embrayage à friction d'un véhicule automobile, comprenant un moyeu (1) portant un disque de support de garniture (9), plusieurs plaquettes de garniture de friction (13, 15), disposées dans la zone de la circonférence extérieure du disque de support de garniture (9), décalées l'une par rapport à l'autre dans le sens circonférentiel, et liées au disque de support de garniture (9), des segments élastiques dans le sens axial (23), composés particulièrement d'un matériau fritté contenant du métal, disposés des deux côtés axiaux du disque de support de garniture (9), sur au moins un des deux côtés axiaux du disque de support de garniture (9), dont chacun porte au moins une des plaquettes de garniture de friction (15) disposées sur ce côté axial du disque de support de garniture (9), et maintenus sur le disque de support de garniture (9), aussi bien en direction circonférentielle des deux côtés du disque de support de garniture (9) par des premiers éléments de fixation (35), en particulier des rivets, que radialement en direction du moyeu (1) sur le côté de ce disque de support de garniture (9) par des deuxièmes éléments de fixation (33), en particulier des rivets, caractérisé en ce que les segments élastiques (23) sont cintrés en direction axiale, et en ce que les premiers éléments de fixation (35) maintiennent les segments élastiques (23) avec jeu axial et radial sur le disque de support de garniture (9).

2. Disque d'embrayage selon la revendication 1, caractérisé en ce que le segment élastique (23) est en saillie par rapport à la plaquette de garniture de friction (15), aussi bien en direction circonférentielle des deux côtés du disque de support de garniture (9) que radialement en direction du moyeu (1), au moyen d'une bande latérale (29, 31) à surface continue entre les éléments de fixation (33, 35) et suivant sensiblement le contour de la plaquette de garniture de friction (15).

3. Disque d'embrayage selon la revendication 2, caractérisé en ce que les plaquettes de garniture de friction (13, 15) et les segments élastiques (23) présentent une forme approximativement trapézoïdale et se rétrécissent en direction du moyeu (1), et en ce que les premiers éléments de fixation (35) et le centre de gravité de surface (27) des plaquettes de garniture de friction (13, 15) sont situés approximativement sur le même rayon (R).

4. Disque d'embrayage selon la revendication 3, caractérisé en ce que la plaquette de garniture de friction (15) est fixée sur le segment élastique (23) au moyen de deux éléments de fixation (35), un des éléments étant situé sur un rayon inférieur au rayon (R) du centre de gravité de surface (27), et l'autre élément étant situé sur un rayon supérieur à ce dernier.

5. Disque d'embrayage selon l'une quelconque des revendications 1 à 4, caractérisé en ce que les premiers éléments de fixation sont conformés en rivets d'écartement (35), qui traversent avec jeu radial des trous (41) des segments élastiques (23), et dont la tête (43) saisissant le segment élastique (23) par l'arrière maintient le segment élastique (23) avec jeu axial sur le disque de support de garniture (9).

6. Disque d'embrayage selon l'une quelconque des revendications 1 à 5, caractérisé en ce que toutes les plaquettes de garniture de friction (13, 15) ont un contour sensiblement similaire, et sont disposées de façon coincidente des deux côtés axiaux du disque de support de garniture (9) sur des tôles de support (19) sensiblement coincidentes, et en ce que le disque de support de garniture (9) présente des évidements radiaux (12) ouverts en direction de la circonférence extérieure et situés entre des plaquettes de garniture de friction (13, 15) adjacentes dans le sens circonférentiel, les bords radiaux de ces évidements suivant sensiblement les bords radiaux des segments élastiques (23).

7. Disque d'embrayage selon l'une quelconque des revendications 2 à 6, caractérisé en ce que plusieurs segments de support de garniture (11) dépassent radialement, selon une configuration en étoile, du disque de support de garniture (9) dans la zone de sa circonférence, et sont séparés les uns des autres par des évidements (12) ouverts en direction de la circonférence extérieure,

en ce que les plaquettes de garniture de friction (13, 15) sont disposées par paire des deux côtés axiaux de chaque segment de support de garniture (11), une première plaquette (13) de chaque paire étant fixée directement sur le segment de support de garniture (11) et une deuxième plaquette de garniture de friction (15) de chaque paire étant fixée sur le segment élastique (23) guidé sur le segment de support de garniture (11) par les premiers éléments de fixation (35) et maintenu sur le disque de support de garniture (9) par les deuxièmes éléments de fixation (33),

et en ce que les segments de support de garniture (11), à l'aide des premiers éléments de fixation (35) empêchent que les segments élastiques (23) ne se tordent au-delà de ce qui est admissible dans le cas d'une sollicitation thermique.

Fig.1

# Fig.2

# Fig.3